# EUROPÄISCHE PATENTSCHRIFT

(11) **EP 1 873 987 B1**
(45) Veröffentlichungstag und Bekanntmachung des Hinweises auf die Patenterteilung: **02.11.2011**
(21) Anmeldenummer: 07111377.3
(22) Anmeldetag: 29.06.2007
(51) Int. Cl.: H04L 12/58, H04L 29/08, H04L 29/12

(54) **Verfahren zum Managen von Nachrichten zwischen zumindest zwei Teilnehmern**
Method for managing messages between at least two parties
Procédé destinés à la gestion de messages entre au moins deux participants

(30) Priorität: 30.06.2006 DE 102006030237
(43) Veröffentlichungstag der Anmeldung: 02.01.2008
(73) Patentinhaber: Vodafone Holding GmbH, 40213 Düsseldorf (DE)
(72) Erfinder: Haiges, Sven, 85622, Feldkirchen (DE); Maretzke, Michael, 82272, Moorenweis (DE)
(74) Vertreter: Müller, Thomas

(56) Entgegenhaltungen:
- EP-A- 1 211 877
- WO-A-01/71925
- US-A1- 2003 023 691
- BLEICH H: "POST FUER DICH FREEMAILER ALS KOMMUNIKATIONSZENTRALEN" CT MAGAZIN FUER COMPUTERTECHNIK, HANNOVER, DE, Bd. 11, Nr. 11, Mai 2000 (2000-05), Seiten 140-146, XP008010160

## Beschreibung

Die vorliegende Erfindung betrifft ein Verfahren zum Managen von Nachrichten zwischen zumindest zwei Teilnehmern durch ein Portal.

Aus dem allgemeinen Stand der Technik ist es beispielsweise bereits bekannt, über ein Internet-Portal Nachrichten in Form von E-Mails zwischen zumindest zwei Teilnehmern zu managen. Diese bekannte Lösung sieht vor, dass sich ein erster Teilnehmer zunächst in einem Kommunikationsnetz, dem Internet registriert, und dass der erste Teilnehmer das Senden und Empfangen von E-Mails über das Internet-Portal ausführt. Wenn sich der erste Teilnehmer im Internet-Portal eingeloggt hat, kann er über ein elektronisches Endgerät, beispielsweise einen Rechner, eine Nachricht erzeugen und im Internet-Portal ablegen, beispielsweise unter der Rubrik "Entwürfe". Im Internet-Portal ist in der Regel eine Teilnehmerdatei des ersten Teilnehmers abgelegt, in der eine Adresskennung in Form einer E-Mail-Adresse wenigstens eines zweiten Teilnehmers abgespeichert ist. Üblicherweise sind in der Teilnehmerdatei Adresskennungen von mehr als zwei zweiten Teilnehmern abgespeichert. Um die erzeugte E-Mail zu verschicken, wählt nun der erste Teilnehmer aus der Teilnehmerdatei die E-Mail-Adresse wenigstens eines zweiten Teilnehmers aus, an den/die die erzeugte E-Mail verschickt werden soll. Anschließend wird die E-Mail an den/die ausgewählte(n) zweiten Teilnehmer übertragen. Ein zweiter Teilnehmer, der eine solche E-Mail erhalten hat, kann dann eine Antwort-E-Mail an den ersten Teilnehmer zurückschicken. Diese Antwort-E-Mail wird dann im Internet-Portal abgelegt, beispielsweise in einem Posteingangsordner. Der erste Teilnehmer kann über das Internet-Portal jederzeit Einblick in den Posteingangsordner nehmen, die dort abgelegten E-Mails öffnen und entsprechend bearbeiten.

Nachteilig bei dieser bekannten Lösung ist jedoch, dass die Übertragung von Nachrichten immer über einen einzigen, ganz bestimmten Übertragungskanal mit einem ganz bestimmten Übertragungsformat erfolgt.

Ferner ist aus der EP 1 211 877 A2 ein Verfahren zum Weiterleiten von Nachrichten an Endgeräte verschiedener Kommunikationsmedien bekannt. Dort ist offenbart, dass ein Kommunikationsserver zum Weiterleiten und Konvertieren von Nachrichten zwischen zwei Teilnehmern ausgebildet ist. Der Kommunikationsserver weist eine Teilnehmer-Datenbank auf, in der teilnehmerspezifische Informationen gespeichert sind. So werden für einen Teilnehmer Eintragsgruppen gespeichert, welche Informationen über ein dem betreffenden Teilnehmer zugeordnetes Telekommunikationsgerät enthalten. Dies können beispielsweise die dem Endgerät zugeordnete Rufadresse (Rufnummer bzw. Zieladresse, wie zum Beispiel die E-Mail-Adresse) sein, die zugehörigen Kommunikationstypen bzw. die kompatiblen Nachrichtenformate sowie bei Bedarf weitere Informationen. Der Kommunikationsserver ist derart eingerichtet, das beim Empfang einer für den Zielteilnehmer bestimmten Nachricht anhand der teilnehmerspezifischen Informationen der Datenbank ein oder mehrere Endgeräte, über welches der Zielteilnehmer erreichbar ist, sowie entsprechende Nachrichtenformate auszuwählen. Ferner findet eine Auswahl statt, zu welchem Endgerät die aktuelle Nachricht gesendet werden soll. Nach der Auswahl werden die Nachrichten an die ausgewählten Endgeräte über die betreffenden Schnittstellen versenden.

Aus der US 2003/0023691 A1 ist ein System bzw. eine Technik zur Weiterleitung von Nachrichten an Empfänger über verschiedene Kommunikationskanäle beschrieben. So wird das Weiterleiten eine Nachricht, wie einer Textnachricht oder einer Sprachnachricht, von der Erreichbarkeit bzw. dem Aktivitätsstatus der Endgeräte des Empfängers abhängig gemacht.

Aus der XP008010160, Holger Bleich: "Post für dich"; CT Computertechnik, Hannover, DE, Bd. 11, Nr. 11, Mai 2000 (2000-05), Seiten 140-146, ist bekannt, dass über Internetportale Nachrichten, beispielsweise in Form einer SMS oder eines Faxnachricht, erzeugt und versendet werden können.

Ausgehend vom genannten Stand der Technik liegt der vorliegenden Erfindung die Aufgabe zugrunde, ein Verfahren der eingangs genannten Art derart weiterzubilden, dass ein erster Teilnehmer Nachrichten an wenigstens einen zweiten Teilnehmer senden kann, ohne dass der erste Teilnehmer zunächst einen bestimmten Übertragungskanal beziehungsweise ein bestimmtes Übertragungsformat ausgewählt haben muss. Der erste Teilnehmer soll vor der Auswahl über die möglichen Übertragungskanäle zu dem zweiten Teilnehmer informiert werden. Ferner soll ein elektronisches Endgerät geschaffen werden zur Durchführung eines derartigen Verfahrens.

Diese Aufgabe wird erfindungsgemäß gelöst durch ein Verfahren zum Managen von Nachrichten zwischen zumindest zwei Teilnehmern mit den Merkmalen gemäß des unabhängigen Patentanspruchs 1. Weitere Vorteile, Merkmale, Details, Aspekte und Effekte der Erfindung ergeben sich aus den Unteransprüchen, der Beschreibung sowie der Zeichnung.

Die Aufgabe wird gemäß eines ersten Aspektes der Erfindung durch ein Verfahren zum Managen von Nachrichten zwischen zumindest zwei Teilnehmern gelöst, wobei ein Portal folgende Schritte durchführt:
a) Speichern von zwei oder mehr Adresskennungen eines zweiten Teilnehmers zum Erreichen von wenigstens zwei unterschiedlichen elektronischen Endgeräten über entsprechende unterschiedliche formatspezifische Übertragungskanäle;
b) Empfangen einer Nachricht von einem ersten Teilnehmer für den zweiten Teilnehmer;
c) Zuordnen der zwei oder mehr Adresskennungen des zweiten Teilnehmers zu der Nachricht;
d) Auswählen eines, zu einer der zugeordneten Adresskennungen passenden Übertragungskanals zum Übertragen der Nachricht an den zweiten Teilnehmer und
e) Übertragen der Nachricht über den ausgewählten Übertragungskanal an den zweiten Teilnehmer;
wobei nach der Zuordnung der zwei oder mehr Adresskennungen des zweiten Teilnehmers zu der Nachricht, das Portal dem ersten Teilnehmer die zur Auswahl stehenden Adresskennungen sendet und wobei nach Empfang einer Antwortnachricht des ersten Teilnehmers, aus der hervorgeht welche Adresskennung der erste Teilnehmer ausgewählt hat, das Portal den zu der Adresskennung passenden Übertragungskanal auswählt und die Nachricht über den ausgewählten Übertragungskanal an den/die ausgewählte(n) zweiten Teilnehmer überträgt.

Durch ein derartiges Verfahren zum Managen von Nachrichten zwischen zumindest zwei Teilnehmern durch ein Portal, kann auf eine einfache und kostengünstige Art und Weise eine Nachricht eines ersten Teilnehmers an zumindest einen zweiten Teilnehmer gesendet werden, ohne dass der erste Teilnehmer zuvor einen bestimmten Übertragungskanal beziehungsweise ein bestimmtes Übertragungsformat ausgewählt hat. D.h., durch ein derartiges Verfahren ist es möglich, eine Nachricht eines ersten Teilnehmers an wenigstens zwei unterschiedliche elektronische Endgeräte eines zweiten Teilnehmers über entsprechende unterschiedliche formatspezifische Übertragungskanäle zu senden.

Durch dieses Verfahren zum Managen von Nachrichten zwischen zumindest zwei Teilnehmern kann eine Kommunikation zwischen einem ersten und wenigstens einem zweiten Teilnehmer erfolgen, wobei es keine Rolle spielt, in welcher Form, d.h. in welchem Format, der erste Teilnehmer eine Nachricht, beispielsweise eine Einladung, an den einen oder an mehrere zweite(n) Teilnehmer gesendet hat. Durch das Verfahren kann eine Nachricht als SM (SM = short message), als E-Mail, als Sprachnachricht oder als Instant Message an wenigstens einen zweiten Teilnehmer gesendet werden. Instant Messaging (IM) ist ein Protokoll für die Echtzeit-Kommunikation von Textnachrichten über das Internet oder über Mobilfunknetze zwischen Instant Messaging Systemen. Mittels Instant Messaging, adäquat einem Echtzeit-Chat, können E-Mails und Nachrichten, aber auch Bilder, Audio- und Video-Files ausgetauscht werden. Der Nachrichtenaustausch ist unmittelbar und verkürzt die Kommunikationsprozesse.

Das Portal übernimmt die Rolle des Vermittlers, um die gesendete Nachricht eines ersten Formates des ersten Teilnehmers an einen zweiten Teilnehmer in einem zum ersten Format gleichen Format oder unterschiedlichen zweiten Format zu senden. Das Portal sendet beispielsweise eine SMS-Nachricht (SMS = short message service) des ersten Teilnehmers in Form einer E-Mail an den zweiten Teilnehmer weiter. So wird durch dieses Verfahren sichergestellt, dass der wenigstens eine zweite Teilnehmer die für ihn bestimmte Nachricht des ersten Teilnehmers erhält, auch wenn der zweite Teilnehmer die Nachricht nicht in dem Format der Nachricht des ersten Teilnehmers erhält.

Zur Durchführung des Verfahrens speichert das Portal zunächst zwei oder mehr Adresskennungen eines zweiten Teilnehmers zum Erreichen von wenigstens zwei unterschiedlichen elektronischen Endgeräten über entsprechende unterschiedliche formatspezifische Übertragungskanäle in einer dem Portal zugeordneten Speichereinrichtung. Die Adresskennungen können Telefonnummern, E-Mail-Adressen, Instant Messaging Kennungen, etc. sein, über die ein elektronisches Endgerät erreichbar ist. Ein Teilnehmer ist ein Nutzer des Portals, dem zumindest ein elektronisches Endgerät, wie ein Mobiltelefon, ein Festnetztelefon, ein Computer, insbesondere ein Laptop, ein Smartfon, ein PDA (PDA = persönlicher digitaler Assistent), etc., zugeordnet ist. In der Regel ist der Teilnehmer im Portal registriert zur Nutzung der Dienste des Portals. Das Portal ist eine Plattform in einem Kommunikationsnetz, das als Vermittler zwischen wenigstens zwei Teilnehmern, die miteinander kommunizieren wollen, dient. Das Portal kann beispielsweise ein Mobilfunkportal oder ein Internetportal bzw. eine Mischform aus Beidem sein. Formatspezifische Übertragungskanäle sind Kanäle, die derart ausgebildet sind, dass sie die unterschiedlichen Formate der Nachrichten, beispielsweise ein SMS, eine Sprachnachricht oder eine E-Mail, entsprechend weiterleiten können.

Die zwei oder mehr Adresskennungen eines zweiten Teilnehmers, die in dem Portal gespeichert sind, können in einer dem ersten Teilnehmer zugeordneten Teilnehmerdatei gespeichert sein. Sie müssen aber nicht zwingend dem ersten Teilnehmer zugeordnet sein. So ist es beispielsweise möglich, dass der erste Teilnehmer auf Adresskennungen anderer Teilnehmer bzw. auf andere Teilnehmerdateien zurückgreift.

In einem zweiten Verfahrensschritt empfängt das Portal die Nachricht für einen zweiten Teilnehmer von dem ersten Teilnehmer. Nach dem Empfang ordnet das Portal die zwei oder mehr Adresskennungen des zweiten Teilnehmers zu der Nachricht zu. Das Portal weist hierzu ein Zuordnungsmittel zum Zuordnen der zwei oder mehr Adresskennungen des zweiten Teilnehmers zu der Nachricht des ersten Teilnehmers auf. Bevorzugt werden alle Adresskennungen des zweiten Teilnehmers der Nachricht zugeordnet. Nach der Zuordnung wählt das Portal einen, zu einer Adresskennung passenden Übertragungskanal zum Übertragen der Nachricht an den zweiten Teilnehmer aus und überträgt die Nachricht über den ausgewählten Übertragungskanal an den/die ausgewählte(n) zweiten Teilnehmer. Zum Auswählen des passenden Übertragungskanals zum Übertragen der Nachricht an den zweiten Teilnehmer weist das Portal Auswahlmittel auf. Die Auswahlmittel berücksichtigen bei der Auswahl das Format der Nachricht des ersten Teilnehmers. So wählen die Auswahlmittel beispielsweise zur Übertragung einer Bildnachricht keinen Sprachübertragungskanal aus, sondern einen Übertragungskanal, wie beispielsweise einen E-Mail-Übertragungskanal, der entsprechende Bildformate übertragen kann.

Vorteilhaft bei diesem Verfahren zum Managen von Nachrichten zwischen zumindest zwei Teilnehmern durch ein Portal ist, dass der erste Teilnehmer sich keine Gedanken machen muss, wie er den wenigstens einen zweiten Teilnehmer erreichen kann. Durch die Zuordnung der Adresskennungen des zweiten Teilnehmers, für den die Nachricht bestimmt ist, zu der Nachricht und das Auswählen, insbesondere das automatische Auswählen, eines passenden Übertragungskanals zum Übertragen der Nachricht an den zweiten Teilnehmer wird ein Verfahren geschaffen, dass eine deutlich höhere Erreichbarkeit des zweiten Teilnehmers für den ersten Teilnehmer bietet. Vorteilhafterweise braucht der erste Teilnehmer nicht eigenständig auswählen, durch welches Übertragungsformat er eine Nachricht an einen oder mehrere zweite(n) Teilnehmer sendet. Dies spart zum einen Zeit für den ersten Teilnehmer. Zweitens können mit seiner Nachricht automatisch mehrere zweite Teilnehmer erreicht werden, auch wenn die mehreren zweiten Teilnehmer unterschiedliche Endgeräte aufweisen. So kann beispielsweise eine Textnachricht des ersten Teilnehmers über eine SMS an ein Mobilfunkgerät eines ersten zweiten Teilnehmers gesendet werden und die gleiche Textnachricht durch eine E-Mail an einen Computer eines zweiten zweiten Teilnehmers übertragen werden. Nach dem Abschicken der Nachricht an das Portal muss der erste Teilnehmer keine weiteren Schritte durchführen, um die Nachricht an unterschiedliche Empfänger mit unterschiedlichen elektronischen Endgeräten zu senden. Dieser Schritt wird durch das erfindungsgemäße Verfahren bzw. das Portal durchgeführt. Ein derartiges Verfahren zum Managen von Nachrichten zwischen zumindest zwei Teilnehmern durch ein Portal schafft einen erheblichen Mehrnutzen, sowohl für denjenigen der eine Nachricht absendet als auch für den oder die Empfänger der Nachricht.

Das Verfahren ermöglicht es verschiedenen Teilnehmern des Portals eine besonders einfache, schnelle und effektive Kommunikation miteinander zu führen. Das Verfahren eignet sich besonders um Termine festzulegen bzw. abzugleichen. Vorteilhaft ist es insbesondere, wenn das Portal für jeden Empfänger, d.h. jeden zweiten Teilnehmer, für den die Nachricht eines ersten Teilnehmers bestimmt ist, nicht nur einen passenden Übertragungskanal auswählt, sondern den günstigsten Übertragungskanal. Hierdurch können beispielsweise Kosten gespart werden. Ferner ist ein zuvor beschriebenes Verfahren vorteilhaft, bei dem das Auswählen eines zu einer Adresskennung passenden Übertragungskanals anhand einer vorgegebenen Reihenfolge erfolgt. So kann beispielsweise zur Übertragung von einer Nachricht eines bestimmten Formats zunächst eine Übertragung der Nachricht über den günstigsten Übertragungskanal bzw. durch das günstigste Übertragungsformat erfolgen. Falls diese Übertragung nicht möglich ist, kann der nächstgünstigste Übertragungskanal bzw. durch das nächstgünstigste Übertragungsformat gewählt werden. Die Auswahl kann dabei anhand einer vom ersten Teilnehmer bestimmbaren Reihenfolge erfolgen. Aber auch das Portal kann von sich auch eine vorgegebene Reihenfolge vorgeben, anhand der die Übertragung vorgenommen wird, falls der erste Teilnehmer keine Vorgabe macht. Andersrum ist es auch denkbar, dass ein zweiter Teilnehmer die Reihenfolge der passenden Übertragungskanäle vorgibt, über die er Nachrichten empfangen möchte.

Bevorzugt ist des Weiteren ein Verfahren, bei dem nach der Zuordnung der zwei oder mehr Adresskennungen des zweiten Teilnehmers zu der Nachricht, das Portal dem ersten Teilnehmer die zur Auswahl stehenden Adresskennungen sendet und dass nach Empfang einer Antwortnachricht des ersten Teilnehmers, aus der hervorgeht welche Adresskennung der erste Teilnehmer ausgewählt hat, das Portal den zu der Adresskennung passenden Übertragungskanal auswählt und die Nachricht über den ausgewählten Übertragungskanal an den/die ausgewählte(n) zweiten Teilnehmer überträgt.

Ein zuvor beschriebenes Verfahren, bei dem ein weiterer Verfahrensschritt vorsieht, dass das Auswählen eines Übertragungskanals dadurch erfolgt, dass in einer dem Portal zugeordneten Vermittlungseinrichtung eine Überprüfung erfolgt, ob das über den Übertragungskanal erreichbare Endgerät des zweiten Teilnehmers aktiv ist, ermöglicht ebenfalls eine schnelle Übertragung eine Nachricht des ersten Teilnehmers. Durch die von der Vermittlungseinrichtung des Portals durchgeführte Überprüfung, ob ein elektronisches Endgerät aktiv ist, kann das Portal gezielt die Nachricht des ersten Teilnehmers an die Adresskennung des Endgerätes senden, bei dem festgestellt worden ist, dass dieses aktiv ist. Hierdurch kann vermieden werden, dass die Nachricht des ersten Teilnehmers den zweiten Teilnehmer erst dann erreicht, wenn ein bestimmtes elektronisches Endgerät des zweiten Teilnehmers wieder aktiv ist. D.h., das Portal überprüft zunächst, ob ein Endgerät des zweiten Teilnehmers aktiv ist. Wird festgestellt, dass keine Übertragung der Nachricht an diese Adresskennung zurzeit möglich ist, so überprüft die Vermittlungseinrichtung des Portals die Verfügbarkeit eines weiteren elektronischen Endgeräts des zweiten Teilnehmers und überträgt die Nachricht des ersten Teilnehmers an diese Adresskennung, falls die Überprüfung ergab, dass das zweite Endgerät über diese Adresskennung erreichbar ist.

Bevorzugt ist ferner ein Verfahren bei dem die Übertragung der Nachricht entsprechend einer bestimmten Reihenfolge an das erste aktive Endgerät übertragen wird. Dies bedeutet, dass die Übertragung an die Adresskennung bzw. an das Endgerät des zweiten Teilnehmers erfolgt, das aktiv ist und dessen Adresskennung in der vorgegebenen Reihenfolge an erster bzw. an nächster Stelle kommt. Dies ermöglicht eine schnelle Übertragung der Nachricht an das aktive Endgerät des zweiten Teilnehmers, welches in der Reihenfolge vorne steht.

Ein Verfahren, bei dem ein weiterer Verfahrensschritt vorsieht, dass das Portal eine Antwortnachricht von dem zweiten Teilnehmer empfängt und die empfangene Antwortnachricht für den ersten Teilnehmer bereitstellt, ist ebenfalls vorteilhaft. Dabei kann die Bereitstellung derart erfolgen, dass das Portal die Antwortnachricht an den ersten Teilnehmer sendet. Die Bereitstellung kann auch innerhalb des Portals selbst erfolgen. D.h., der erste Teilnehmer kann in einer für ihn zugänglichen Datei die Antworten eines zweiten Teilnehmers oder mehrere zweiter Teilnehmer anschauen bzw. abrufen. Das Portal kann dabei dem ersten Teilnehmer signalisieren, dass eine Antwortnachricht eines zweiten Teilnehmers vorliegt.

Ein weiterer vorteilhafter Verfahrensschritt des Verfahrens sieht vor, dass der wenigstens eine zweite Teilnehmer im Portal des Kommunikationsnetzes registriert wird und dass das Portal, insbesondere die Vermittlungseinrichtung des Portals, eine Überprüfung durchführt, ob das über einen Übertragungskanal erreichbare Endgerät des zweiten Teilnehmers im Kommunikationsnetzes, welches das Portal nutzt, eingeloggt ist und dass die Übertragung der Nachricht entsprechend der bestimmten Reihenfolge an ein eingeloggtes Endgerät übertragen wird. Die Überprüfung, ob ein Endgerät eines zweiten Teilnehmers erreichbar ist, ist leichter für das Portal bzw. die Vermittlungseinrichtung des Portals durchführbar, wenn der wenigstens eine zweite Teilnehmer im Portal des Kommunikationsnetzes registriert ist. Ein eingeloggtes Endgerät ist "aktiv", so dass das Portal feststellen kann, dass eine Nachricht für den zweiten Teilnehmer an dieses Endgerät geschickt werden kann.

Vorteilhaft ist ferner ein Verfahren, bei dem die zwei oder mehr Adresskennungen eines zweiten Teilnehmers in einer dem ersten Teilnehmer zugeordneten Teilnehmerdatei gespeichert werden. Das Portal versucht aufgrund der Nachricht des ersten Teilnehmers den zweiten Teilnehmer, d.h. dessen Adresskennungen, herauszufinden. Dies ist einfach möglich, wenn der zweite Teilnehmer dem Portal bekannt ist, insbesondere im Portal registriert ist. Besonders einfach ist es, wenn die zwei oder mehr Adresskennungen eines zweiten Teilnehmers in einer dem ersten Teilnehmer zugeordneten Teilnehmerdatei gespeichert sind. Zum einen erleichtert dies die Suche der Adresskennungen des zweiten Teilnehmers für das Portal, zum anderen kann der erste Teilnehmer auf diese ihm zugeordnete Teilnehmerdatei direkt zugreifen und die Empfänger für seine Nachricht aussuchen. Der erste Teilnehmer kann die Teilnehmerdatei selbst erzeugen. Dies kann einerseits durch Senden einer Datei mit entsprechenden Teilnehmerkennungen an das Portal erfolgen. Andererseits kann der erste Teilnehmer die Teilnehmerdatei direkt im Portal erzeugen. Hierzu muss er beispielsweise über einen Browser auf die entsprechenden Seiten des Portal gehen und die Teilnehmerkennungen bzw. die Adresskennungen in einer ihm zugeordneten Teilnehmerdatei anlegen.

In vorteilhafter Ausgestaltung wird ein Verfahren zum Managen von Nachrichten zwischen zumindest zwei Teilnehmern durch folgende vom ersten Teilnehmer durchgeführte Schritte gekennzeichnet:
a) Erzeugen einer Nachricht für zumindest einen zweiten Teilnehmer in einem dem ersten Teilnehmer zugeordneten elektronischen Endgerät;
b) Senden der Nachricht an ein Portal,
c) Empfangen einer Auswahlnachricht des Portals, in der das Portal dem ersten Teilnehmer die zur Auswahl stehenden Adresskennungen des zweiten Teilnehmers sendet;
d) Auswählen einer Adresskennung des zweiten Teilnehmers und
e) Senden einer weiteren Nachricht, aus der hervorgeht welche Adresskennung des zweiten Teilnehmers der erste Teilnehmer ausgewählt hat, an das Portal.

Zunächst erzeugt der erste Teilnehmer eine Nachricht für zumindest einen zweiten Teilnehmer. Hierzu nutzt er ein ihm zugeordnetes elektronischen Endgerät, wie beispielsweise ein Mobiltelefon oder einen Computer. Nach der Fertigstellung der Nachricht sendet er diese an das Portal. In einem nächsten Schritt empfängt der erste Teilnehmer, d.h. das ihm zugeordnete elektronische Endgerät, eine Auswahlnachricht des Portals, in der das Portal ihm die zur Auswahl stehenden Adresskennungen des zweiten Teilnehmers sendet. Aus diesen zur Auswahl stehenden Adresskennungen des zweiten Teilnehmers wählt der erste Teilnehmer Eine aus und sendet in einer weiteren Nachricht das Ergebnis seiner Wahl an das Portal zurück. Durch dieses Verfahren wird es dem ersten Teilnehmer ermöglicht selber auszuwählen, zu welcher Adresskennung, d.h. zu welchem elektronischen Endgerät, des zweiten Teilnehmers seine Nachricht gesendet werden soll. Nach dem Erhalt der weiteren Nachricht, aus der hervorgeht welche Adresskennung des zweiten Teilnehmers der erste Teilnehmer ausgewählt hat, überträgt das Portal die Nachricht an die vom ersten Teilnehmer ausgewählte Adresskennung. Hierdurch kann der erste Teilnehmer beeinflussen wie seine Nachricht an einen Empfänger gesendet werden soll. Bevorzugt ist der erste Teilnehmer in dem Portal als Nutzer registriert.

Bevorzugt ist ein Portal innerhalb eines Kommunikationsnetzes zum Managen von Nachrichten zwischen zumindest zwei Teilnehmern vorgesehen, wobei dem Portal eine Speichereinrichtung zum Ablegen einer über ein elektronisches Endgerät eines ersten Teilnehmers erzeugten Nachricht und zum Speichern von zwei oder mehr Adresskennungen unterschiedlicher Übertragungsformate eines zweiten Teilnehmers zum Erreichen von wenigstens zwei unterschiedlichen elektronischen Endgeräten über entsprechende formatspezifische Übertragungskanäle zugeordnet ist, und wobei das Portal Übertragungsmittel zum Senden und Empfangen von Nachrichten unterschiedlicher Formate, Zuordnungsmittel zum Zuordnen der zwei oder mehr Adresskennungen des zweiten Teilnehmers zu der Nachricht des ersten Teilnehmers aufweist, und Auswahlmittel zum Auswählen eines, zu einer Adresskennung passenden Übertragungskanals zum Übertragen der Nachricht an den zweiten Teilnehmer aufweist.

Ein derartiges Portal ermöglicht die Durchführung des zuvor beschriebenen Verfahrens um Managen von Nachrichten zwischen zumindest zwei Teilnehmern. Durch ein derartiges Portal zum Managen von Nachrichten zwischen zumindest zwei Teilnehmern, kann auf eine einfache und kostengünstige Art und Weise eine Nachricht eines ersten Teilnehmers an zumindest einen zweiten Teilnehmer gesendet werden, ohne dass der erste Teilnehmer zuvor einen bestimmten Übertragungskanal beziehungsweise ein bestimmtes Übertragungsformat ausgewählt hat. D.h., durch ein derartiges Portal ist es möglich, eine Nachricht eines ersten Teilnehmers an wenigstens zwei unterschiedliche elektronische Endgeräte eines zweiten Teilnehmers über entsprechende unterschiedliche formatspezifische Übertragungskanäle zu senden.

Dem Portal ist eine Speichereinrichtung zum Ablegen einer über ein elektronisches Endgerät eines ersten Teilnehmers erzeugten Nachricht und zum Speichern von zwei oder mehr Adresskennungen unterschiedlicher Übertragungsformate eines zweiten Teilnehmers zum Erreichen von wenigstens zwei unterschiedlichen elektronischen Endgeräten über entsprechende formatspezifische Übertragungskanäle zugeordnet. Das Portal speichert zunächst in der Speichereinrichtung zwei oder mehr Adresskennungen eines zweiten Teilnehmers zum Erreichen von wenigstens zwei unterschiedlichen elektronischen Endgeräten über entsprechende unterschiedliche formatspezifische Übertragungskanäle. Die Adresskennungen können, wie zuvor beschrieben Telefonnummern, E-Mail-Adressen, Instant Messaging Kennungen, etc. sein, über die ein elektronisches Endgerät erreichbar ist. Ein Teilnehmer ist ein Nutzer des Portals, dem zumindest ein elektronisches Endgerät zugeordnet ist. In der Regel ist der Teilnehmer zur Nutzung der Dienste des Portals im Portal registriert. Das Portal ist eine Plattform in einem Kommunikationsnetz, das als Vermittler zwischen wenigstens zwei Teilnehmern, die miteinander kommunizieren wollen, dient. Das Portal kann beispielsweise ein Mobilfunkportal oder ein Internetportal bzw. eine Mischform aus Mobilfunkportal und Internetportal sein.

Die zwei oder mehr Adresskennungen eines zweiten Teilnehmers, die in dem Portal gespeichert sind, können in einer dem ersten Teilnehmer zugeordneten Teilnehmerdatei gespeichert sein. Sie müssen aber nicht zwingend dem ersten Teilnehmer zugeordnet sein. So ist es beispielsweise möglich, dass der erste Teilnehmer auf Adresskennungen anderer Teilnehmer bzw. auf Teilnehmerdateien anderer Teilnehmer zurückgreifen kann.

Das Portal weist ferner Übertragungsmittel zum Senden und Empfangen von Nachrichten unterschiedlicher Formate auf. Die Übertragungsmittel ermöglichen es dem Portal eine Nachricht von dem ersten Teilnehmer für einen zweiten Teilnehmer zu empfangen und an dem zweiten Teilnehmer weiterzuleiten. Das Portal übernimmt die Rolle des Vermittlers, um die gesendete Nachricht eines ersten Formates des ersten Teilnehmers an einen zweiten Teilnehmer in einem zum ersten Format unterschiedlichen zweiten Format zu senden. Das Portal sendet beispielsweise eine MMS-Nachricht (MMS = multimedia messaging service) des ersten Teilnehmers in Form einer E-Mail an den zweiten Teilnehmer weiter. So wird durch dieses Verfahren sichergestellt, dass der wenigstens eine zweite Teilnehmer die für ihn bestimmte Nachricht des ersten Teilnehmers erhält, auch wenn der zweite Teilnehmer die Nachricht nicht in dem Format der Nachricht des ersten Teilnehmers erhält. Eine MMS-Mitteilung kann beispielsweise aus Texten, Grafiken, Ton- und Sprachdokumenten, aus Bildern sowie aus Videosequenzen bestehen.

Nach dem Empfang der Nachricht des ersten Teilnehmers für einen zweiten Teilnehmer ordnet das Portal die zwei oder mehr Adresskennungen des zweiten Teilnehmers zu der Nachricht des ersten Teilnehmers zu. Das Portal weist hierzu ein Zuordnungsmittel zum Zuordnen der zwei oder mehr Adresskennungen des zweiten Teilnehmers zu der Nachricht des ersten Teilnehmers auf. Das Zuordnungsmittel kann dabei derart ausgebildet sein, dass alle Adresskennungen des zweiten Teilnehmers der Nachricht des ersten Teilnehmers zugeordnet werden können.

Das Portal weist ferner Auswahlmittel zum Auswählen eines, zu einer Adresskennung passenden Übertragungskanals zum Übertragen der Nachricht an den zweiten Teilnehmer auf. D.h., nach der Zuordnung der Adresskennung wählt das Portal einen, zu der Adresskennung passenden Übertragungskanal zum Übertragen der Nachricht an den zweiten Teilnehmer aus und überträgt die Nachricht über den ausgewählten Übertragungskanal an den/die ausgewählte(n) zweiten Teilnehmer bzw. and die Adresskennung des oder der zweiten Teilnehmer(s). Die Auswahlmittel berücksichtigen bei der Auswahl das Format der Nachricht des ersten Teilnehmers. So sind die Auswahlmittel derart ausgebildet, dass sie beispielsweise zur Übertragung einer Bildnachricht keinen Sprachübertragungskanal auswählen, sondern einen Übertragungskanal, wie beispielsweise einen E-Mail-Übertragungskanal, der entsprechende Bildformate übertragen kann.

Ein derartiges Portal zum Managen von Nachrichten zwischen zumindest zwei Teilnehmern ermöglicht, dass der erste Teilnehmer sich keine Gedanken machen muss, wie er den wenigstens einen zweiten Teilnehmer erreichen kann. Durch die Zuordnung der Adresskennungen des zweiten Teilnehmers, für den die Nachricht bestimmt ist, zu der Nachricht und das Auswählen, insbesondere das automatische Auswählen, eines passenden Übertragungskanals zum Übertragen der Nachricht an den zweiten Teilnehmer ist ein Portal geschaffen, dass ein deutlich höhere Erreichbarkeit des zweiten Teilnehmers für den ersten Teilnehmer bietet. Vorteilhafterweise braucht der erste Teilnehmer durch die Nutzung des Portals nicht eigenständig auszuwählen, durch welches Übertragungsformat er eine Nachricht an einen oder mehrere Teilnehmer sendet. Dies spart Zeit für den ersten Teilnehmer. Ferner können automatisch mehrere Teilnehmer erreicht werden mit seiner Nachricht, auch wenn die mehreren Teilnehmer unterschiedliche Endgeräte aufweisen. So kann beispielsweise eine Bildnachricht des ersten Teilnehmers über eine MMS an ein Mobilfunkgerät eines ersten zweiten Teilnehmers gesendet werden und die gleiche Textnachricht durch eine E-Mail an einen Computer eines zweiten zweiten Teilnehmers übertragen werden. Nach dem Abschicken der Nachricht an das Portal muss der erste Teilnehmer keine weiteren Schritte durchführen, um die Nachricht an unterschiedliche Empfänger mit unterschiedlichen elektronischen Endgeräten zu senden. Dieser Schritt wird durch das erfindungsgemäße Portal durchgeführt. Ein derartiges Portal zum Managen von Nachrichten zwischen zumindest zwei Teilnehmern schafft einen erheblichen Mehrnutzen, sowohl für denjenigen der eine Nachricht absendet als auch für denjenigen oder diejenigen Empfänger der Nachricht.

Das Portal ermöglicht verschiedenen Teilnehmern eine besonders einfache, schnelle und effektive Kommunikation miteinander. Das Portal eignet sich besonders um Termine festzulegen bzw. abzugleichen. Vorteilhaft ist es insbesondere, wenn das Portal für jeden Empfänger, d.h. jeden zweiten Teilnehmer für den die Nachricht eines ersten Teilnehmers bestimmt ist, nicht nur einen passenden Übertragungskanal auswählt, sondern den günstigsten Übertragungskanal. Hierdurch können beispielsweise Kosten gespart werden.

Bevorzugt ist ferner ein Portal, bei dem die Auswahlmittel zum Auswählen eines zu einer Adresskennung passenden Übertragungskanals anhand einer vorgegebenen Reihenfolge ausgebildet sind. Die Reihenfolge kann dabei von dem Portal selbst, von dem ersten Teilnehmer oder auch von dem zweiten Teilnehmer vorgegeben werden. So kann beispielsweise zur Übertragung von einer Nachricht eines bestimmten Formats zunächst eine Übertragung der Nachricht über den günstigsten Übertragungskanal bzw. durch das günstigste Übertragungsformat erfolgen. Falls diese Übertragung nicht möglich ist, kann der nächstgünstigste Übertragungskanal bzw. durch das nächstgünstigste Übertragungsformat gewählt werden.

Ein Portal dem eine Vermittlungseinrichtung zur Überprüfung, ob das über den Übertragungskanal erreichbare Endgerät des zweiten Teilnehmers aktiv ist, zugeordnet ist, hat den Vorteil, dass sichergestellt werden kann, dass die Nachricht auch bei dem Empfänger zeitig ankommt. Nach der von der Vermittlungseinrichtung des Portals durchgeführten Überprüfung kann das Portal gezielt die Nachricht des ersten Teilnehmers an die Adresskennung des Endgerätes senden, von dem festgestellt worden ist, dass dieses aktiv ist. Hierdurch kann vermieden werden, dass die Nachricht des ersten Teilnehmers den zweiten Teilnehmer erst dann erreicht, wenn ein bestimmtes elektronisches Endgerät des zweiten Teilnehmers wieder aktiv ist. D.h., das Portal überprüft zunächst, ob eine Adresskennung eines Endgerätes des zweiten Teilnehmers aktiv ist. Hierzu überprüft die Vermittlungseinrichtung, ob der zweite Teilnehmer in dem Portal eingeloggt ist. Wird festgestellt, dass keine Übertragung der Nachricht an eine erste Adresskennung zurzeit möglich ist, so überprüft die Vermittlungseinrichtung des Portals die Verfügbarkeit einer zweiten Adresskennung eines weiteren elektronischen Endgeräts des zweiten Teilnehmers und überträgt die Nachricht des ersten Teilnehmers an diese Adresskennung, falls die Überprüfung ergab, dass das zweite Endgerät über diese Adresskennung erreichbar ist.

Bevorzugt ist ferner ein Portal, das eine Registrierungseinrichtung aufweist und das oder dessen Vermittlungseinrichtung zur Überprüfung, ob das über einen Übertragungskanal erreichbare Endgerät des zweiten Teilnehmers im Kommunikationsnetz, welches das Portal nutzt, eingeloggt ist, ausgebildet ist. Die Registrierungseinrichtung ermöglicht Teilnehmern sich im Portal zur Nutzen des Portals zu registrieren. Nach der Registrierung werden die Daten, d.h. die Adresskennungen, der Teilnehmer in der Speichereinrichtung des Portals gespeichert. Durch die Registrierung der Teilnehmer und Speicherung der zumindest zwei unterschiedlichen Adresskennungen der Teilnehmer kann das Portal leicht auf diese Daten zurückgreifen, wenn ein erster Teilnehmer eine Nachricht an einen der registrierten zweiten Teilnehmer senden möchte. Ferner ist es für das Portal einfach festzustellen ob ein registrierter Teilnehmer aktiv ist, d.h. zum Zeitpunkt der Überprüfung eingeloggt ist.

Bevorzugt ist ein elektronisches Endgerät vorgesehen, insbesondere ein Mobiltelefon, wobei dieses Mittel zur Durchführung des zuvor beschriebenen Verfahrens zum Managen von Nachrichten zwischen zumindest zwei Teilnehmern aufweist. Die Mittel sind Sende- und Empfangsmittel zur Senden und Empfangen von Nachrichten und Eingabeeinrichtungen zum Erzeugen einer Nachricht. Ferner umfassen die Mittel Auswählmittel zum Auswählen einer Adresskennung des zweiten Teilnehmers aus einer Nachricht des Portals. Das elektronische Endgerät kann ein Mobiltelefon, ein Festnetztelefon, ein Computer, insbesondere ein Laptop, ein Smartfon, ein PDA oder ein ähnliches Gerät zum Erzeugen, Senden und Empfangen von Nachrichten jeglicher Art sein.

Ein elektronisches Endgerät, insbesondere ein Mobiltelefon, kann zur Durchführung des zuvor beschriebenen Verfahrens zum Managen von Nachrichten vorgesehen sein.

Nachfolgend werden beispielhaft Ausführungsbeispiele des Verfahrens bzw. des Portal aufgeführt. Das Verfahren und das Portal können als Service genutzt werden, um Ereignisse oder Termine zu managen. Bei dem Verfahren kommen vier Parts zum Einsatz: Der Initiator, d.h. der erste Teilnehmer, der eine Nachricht versenden will; die Empfänger, d.h. die zweiten Teilnehmer, für die eine Nachricht bestimmt ist;
das Portal zum Managen der Kommunikation zwischen dem ersten Teilnehmer und den zweiten Teilnehmern sowie ein Speichereinrichtung die dem Portal zugeordnet ist.

Der erste Teilnehmer hat beispielsweise ein Bedürfnis ein paar Kollegen zu einem Treffen zu bitten. Er ist der Hauptnutzer des Verfahrens und des Portals und er löst mit Hilfe des oben beschriebenen Verfahrens beispielsweise einen Abstimmungsprozess zu einem Termin aus, in den die zweiten Teilnehmer involviert sind. Der erste Teilnehmer hat die Möglichkeit die Antworten des Abstimmungsprozess durch das Portal anzuschauen und aufgrund der Antworten der zweiten Teilnehmer den Termin festzulegen oder zu abzusagen.

Der erste Teilnehmer und die zweiten Teilnehmer interagieren beispielsweise mit einem Mobilfunkportal. Das Portal ist der Ort, an dem der erste Teilnehmer ein neues Ereignis, beispielsweise eine Abfrage zu einem Treffen, kreiert und die zweiten Teilnehmer zu einem Abstimmungsprozess zu dem Ereignis einlädt. Die zweiten Teilnehmer nutzen das Portal als Antwortmechanismus, um dem ersten Teilnehmer mitzuteilen, dass sie mit dem Ereignis einverstanden sind oder nicht.

Die zweiten Teilnehmer werden bevorzugt in eine Teilnehmerdatei des ersten Teilnehmers in das Portal, insbesondere die Speichereinrichtung des Portals, hinzugefügt. Das erfindungsgemäße Verfahren und Portal stellen sicher, dass die zweiten Teilnehmer die Nachricht des ersten Teilnehmers erhalten, welches Format auch immer für die Übertragung der Nachricht durch das Portal gewählt wird. Dies bedeutet, dass die Kommunikation zwischen dem Portal und den zweiten Teilnehmern technologieagnostisch ist und die bestmögliche Übertragungsform automatisch ausgewählt wird durch das Portal. Die zweiten Teilnehmer werden beispielsweise per SMS kontaktiert. Wenn aber einige Teilnehmer besser per instant messaging erreicht werden können, sendet das Portal die Nachricht per instant messaging an diese Teilnehmer zuerst. Nachrichten können auch in Form einer Sprachnachricht gesendet werden.

Alle Nachrichten, die vom ersten Teilnehmer gesendet werden sowie alle Antwortnachrichten der zweiten Teilnehmer werden dauerhaft in einer Speichereinrichtung des Portals gespeichert. Hierdurch hat der erste Teilnehmer die Möglichkeit in dem Portal nach einer gewissen Zeit zu nachzuschauen, ob alle Antwortnachrichten eingegangen sind.

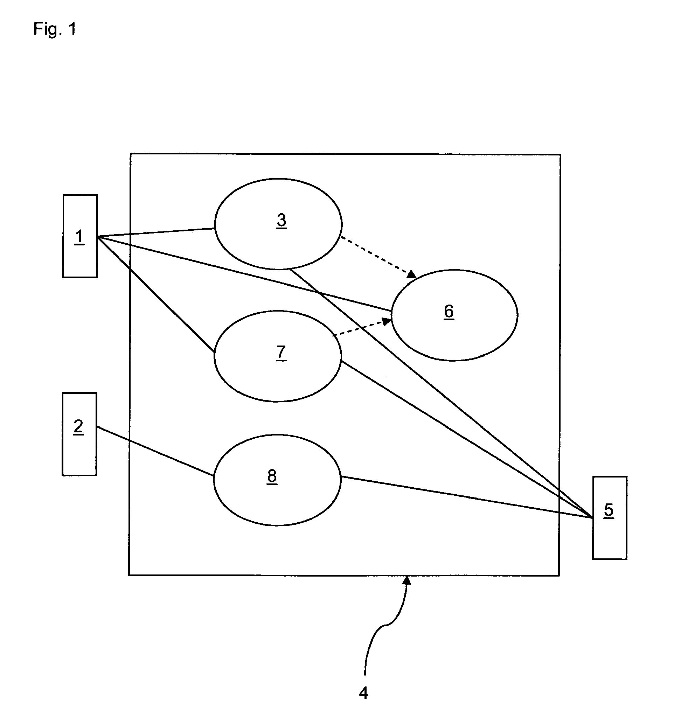

Die beigefügte Fig. 1 zeigt schematisch eine Ausführungsvariante des erfindungsgemäßen Verfahrens zum Managen von Nachrichten zwischen zumindest zwei Teilnehmern 1, 2. Der erste Teilnehmer 1 managt die weiteren zweiten Teilnehmer 2. Hierzu fügt er zweite Teilnehmer zu seiner individuellen Teilnehmerliste 3 hinzu bzw. entfernt diese aus der Teilnehmerliste 3. Die zweiten Teilnehmer 2 der Teilnehmerliste 3 können als Empfänger einer Nachricht von dem ersten Teilnehmer 1 ausgewählt werden. Alle Aktionen werden durch die dem Portal 4 zugeordnete Speichereinrichtung 5 gespeichert.

Der erste Teilnehmer 1 kann Nachrichten erzeugen bzw. Events auslösen mit seinen Nachrichten. D.h. der erste Teilnehmer 1 kann Events erzeugen, löschen und übermitteln. Nach dem Erzeugen eines neuen Events, fügt der erste Teilnehmer 1 zweite Teilnehmer 2 aus der Teilnehmerliste 3, für die der Event, beispielsweise eine Einladung, bestimmt ist, zu dem Event hinzu. Der Event bzw. die Einladung wird den zweiten Teilnehmern 2 übermittelt. Dem Event wird dabei eine Zeitmarke zugeordnet, zu welchem Zeitpunkt das Portal 4 die beginnt die zweiten Teilnehmer 2 zur erreichen. Alle Daten zu diesem Event werden in der Speichereinrichtung 5 abgelegt. Bevor der erste Teilnehmer 1 das Portal 4 nutzen kann, muss er sich beim Portal für den Dienst zum Managen von Nachrichten zwischen zumindest zwei Teilnehmern registrieren lassen. Nach der Registrierung kann er sich in dem Portal einloggen und die Teilnehmerliste 3 verwalten und Nachrichten an zweite Teilnehmer 2 versenden bzw. von diesen empfangen. Die zweiten Teilnehmer 2 können unterschiedlich auf die von dem ersten Teilnehmer ausgelösten Events reagieren. Eine Einladung können sie akzeptieren oder ablehnen. Um die Kommunikation zwischen dem ersten Teilnehmer 2 und den zweiten Teilnehmern 2 durchzuführen, wählt das Portal 4 den bestmöglichen Übertragungskanal für die Übermittlung der Nachrichten von und zu den Teilnehmer(n). Zur Nutzung des Verfahrens registrieren sich der erste Teilnehmer 1 und die zweiten Teilnehmer 2 in einer Registrierungseinrichtung 6 des Portals 4. Das Portal 4 weist eine Eventliste 7 auf, in der die Events abgelegt werden. Ferner weist das Portal 4 eine Antwortliste 8 auf, in der die Antwortnachrichten der zweiten Teilnehmer 2 angelegt und aufrufbar sind. Die Teilnehmerliste 3, die Registrierung der Teilnehmer 1, 2, die Eventliste 7 und/oder die Antwortliste 8 werden in der Speichereinrichtung 5 gespeichert.

Nachfolgend wird ein Service-Szenario beschrieben:

Die erste Teilnehmerin Anne lädt die Teilnehmer Ihrer Teilnehmerliste zu einem Barbecue ein. Um 5 Uhr nachmittags überlegt Anne eine Barbecue-Party in ihrem Haus zu machen. Anstatt jeden ihrer Freunde einzeln anzurufen, möchte Anne den Dienst des Portals zum Managen von Nachrichten zwischen zumindest zwei Teilnehmern nutzen. Anne ist in dem Portal registriert und eingeloggt. Anne fügt die Empfänger der Einladungsnachricht zu der Einladungsnachricht hinzu. Anne nennt die Einladungsnachricht "Barbecue @ Anne, tonight!". Anne entscheidet ferner, dass ihre Empfänger eine Stunde Zeit haben auf ihre Einladungsnachricht zu antworten. Nach dieser Stunde sind die Einkaufsläden geschlossen, so dass es für die Organisation der Barbecue-Party zu knapp würde. Anne fügt der Einladungsnachricht die Startzeit der Barbecue-Party hinzu und sendet diese über das Portal an die zweiten Teilnehmer, d.h. ihre Freunde.

Einer der Freunde für die die Einladungsnachricht bestimmt war ist Jon. Er erhält die Einladungsnachricht als SMS, da das Portal festgestellt hat das sein Mobilfunktelefon angeschaltet ist. Auf die Einladungsnachricht antwortet Jon mit ebenfalls einer SMS, die er zurückschickt an das Portal.

Ein weiterer Freund ist Peter, der zum Zeitpunkt des Sendens der Einladungsnachricht noch im Büro arbeitet. Peter ist bei dem Portal mit seinem Instant Messaging System eingeloggt und erhält daher eine Instant Message von dem Portal als Einladungsnachricht. Da er aber lange Arbeiten muss, antwortet Peter über sein Instant Messaging System mit einer Absage und fügt der Absage seine Begründung hinzu.

Nach einer Stunde betritt Anne erneut das Portal, um nachzuschauen, ob Antwortnachrichten eingegangen sind. Hierzu schaut sie in ihrer Eventliste und sich nach dem vor einer Stunde gestarteten Event. Sie erkennt in einer Antwortliste zu ihrer Einladung, dass Freunde die Einladung angenommen und 3 abgesagt haben. Aufgrund der Antwortnachrichten entscheidet Anne, dass 5 Freunde ausreichend sind für die Barbecue-Party und sendet an diese 5 Freunde erneut eine Nachricht zur Bestätigung der Barbecue-Party. D.h., dass Portal sendet an alle zweiten Teilnehmer mit positiven Antwortnachrichten eine Bestätigungsnachricht für das Stattfinden der Barbecue-Party.

Das Abstimmen über das Stattfinden der Barbecue-Party beinhaltet den Hauptteil der Kommunikationslogik in dem Portal. Das Portal empfängt eine Vielzahl von Events bzw. managt eine Vielzahl von Nachrichten und Antwortnachrichten. Hierzu nutzt das Portal eine ausgeklügelte Logik, um die Nachrichten, Antwortnachrichten und Bestätigungsnachrichten zu senden und zu empfangen. In Abhängigkeit von dem Zustand der Empfänger, d.h. Mobiltelefon an/aus, erreichbar via Instant Message, E-Mail oder Festnetztelefon, wählt das Portal das beste Übertragungsformat für jeden zweiten Teilnehmer. Um dies zu ermöglichen arbeiten zwei Komponenten beim Übertragen der Nachrichten zu dem zweiten Teilnehmer zusammen. Die erste Komponente ist die so genannte Enabler-Kette, die angibt über welchen Übertragungskanal bzw. durch welches Übertragungsformat der erste Teilnehmer eine Nachricht senden möchte bzw. der Empfänger empfangen möchte. Wie die verschiedenen Übertragungskanäle zusammenhängen ist in einer Eigenschaftenliste vermerkt. Die Eigenschaftenliste gibt an, welche Schritte ausgeführt werden sollen, wie beispielsweise:
- sende eine Nachricht über ein bestimmtes Format (z.B. durch eine SMS) und führe keine Übertragung in einem anderen Format aus,
- sende eine Nachricht über ein bestimmtes Format (z.B. durch eine SMS) und übergebe die Kontrolle der Nachricht an ein weiteres Format,
- mache nichts und übergebe die Kontrolle der Nachricht an ein weiteres Format,
- mache nichts und breche ab.

Die Reihenfolge in der versucht werden soll die Nachricht an den zweiten Teilnehmer zu senden wird bei jeder Nachricht neu eingehalten. Die Reihenfolge kann in dem Portal geändert werden. Hierzu muss kein Java-Source-Code umprogrammiert werden, sondern lediglich eine Textdatei verändert werden.

Die zweite Komponente wird von jedem Übertragungsformat bzw. Übertragungskanal benutzt, um die Nachricht für ihr Versenden zu generieren. Mittels einer so genannten Factory kann die Nachricht in das gewünschte spezielle Format umgewandelt werden.

Die Übertragung der Nachricht an den zweiten Teilnehmer erfolgt nach folgenden Regeln:
- Übertragungsreihenfolge: SMS - IM - E-Mail - etc.
- Versuch des Sendens einer SMS-Nachricht in Abhängigkeit von den Netzkapazitäten. Wenn der zweite Teilnehmer sein Mobiltelefon angeschaltet hat und per SMS erreichbar ist, wird die Nachricht nur per SMS versendet und kein weiterer Versuch unternommen in einem anderen Übertragungsformat die Nachricht an den zweiten Teilnehmer zu senden.
- Wenn das Mobiltelefon des zweiten Teilnehmers nicht erreichbar ist (offline ist) wird versucht eine Instant Message zu senden. Wenn festgestellt wird dass der zweiten Teilnehmer eine Instant Messaging Adresse hat und dieser online ist, wird die Nachricht als Instant Message versendet und alle weiteren Versuche mit anderen Übertragungsformaten unterlassen.
- Wenn auch die Übertragung per Instant Message nicht möglich ist, erfolgt die Übertragung der Nachricht per E-Mail.

Um herauszufinden, ob ein Empfänger erreichbar ist (Telefon an) oder nicht, wird ein Datenbankabfrage durch das Portal durchgeführt. Basierend auf dem Ergebnis der Abfrage, wie ein Empfänger erreichbar ist, wird die Nachricht per SMS gesendet oder nicht. Um Herauszufinden, ob ein Nutzer per SMS, Instant Message oder E-Mail erreichbar ist, wird ein Jabber API eingesetzt. Basierend auf dem Ergebnis der Untersuchung wird die Nachricht übersandt. Eine E-Mail ist immer sendbar. Hierzu wird nur ein unbegrenzter Zugang zu dem SMTP-Host benötigt.

Die Nachricht, die zu den zweiten Teilnehmern gesendet wird, beinhaltet immer die gleiche Information, auch wenn sie in unterschiedlichen Formaten übertragen wird. Eine E-Mail-Nachricht erlaubt z.B. eine umfangreichere Nachricht, als eine SMS, die auf 160 Zeichen begrenzt ist. Die für das Portal notwendigen Informationen, wie das Nachrichtkennung, die Adressdaten des zweiten Teilnehmers, die Zeit, der Ort und andere Informationen sind bevorzugt Teil der Nachricht an den zweiten Teilnehmer.

## Patentansprüche

1. Verfahren zum Managen von Nachrichten zwischen zumindest zwei Teilnehmern, wobei ein Portal folgende Schritte durchführt:
a) Speichern von zwei oder mehr Adresskennungen eines zweiten Teilnehmers zum Erreichen von wenigstens zwei unterschiedlichen elektronischen Endgeräten über entsprechende unterschiedliche formatspezifische Übertragungskanäle;
b) Empfangen einer Nachricht von einem ersten Teilnehmer für den zweiten Teilnehmer;
c) Zuordnen der zwei oder mehr Adresskennungen des zweiten Teilnehmers zu der Nachricht;
d) Auswählen eines, zu einer der zugeordneten Adresskennungen passenden Übertragungskanals zum Übertragen der Nachricht an den zweiten Teilnehmer und
e) Übertragen der Nachricht über den ausgewählten Übertragungskanal an den zweiten Teilnehmer,
**dadurch gekennzeichnet, dass** nach der Zuordnung der zwei oder mehr Adresskennungen des zweiten Teilnehmers zu der Nachricht, das Portal dem ersten Teilnehmer die zur Auswahl stehenden Adresskennungen sendet und dass nach Empfang einer Antwortnachricht des ersten Teilnehmers, aus der hervorgeht welche Adresskennung der erste Teilnehmer ausgewählt hat, das Portal den zu der Adresskennung passenden Übertragungskanal auswählt und die Nachricht über den ausgewählten Übertragungskanal an den/die ausgewählte(n) zweiten Teilnehmer überträgt.

2. Verfahren nach Anspruch 1, **dadurch gekennzeichnet, dass** das Auswählen eines, zu einer Adresskennung passenden Übertragungskanals anhand einer vorgegebenen Reihenfolge erfolgt.

3. Verfahren nach Anspruch 1 oder 2, **dadurch gekennzeichnet, dass** das Portal eine Antwortnachricht von dem zweiten Teilnehmer empfängt und die empfangene Antwortnachricht für den ersten Teilnehmer bereitstellt.

4. Verfahren nach einem der Ansprüche 1 bis 3, **dadurch gekennzeichnet, dass** die zwei oder mehr Adresskennungen eines zweiten Teilnehmers in einer dem ersten Teilnehmer zugeordneten Teilnehmerdatei gespeichert werden.

## Claims

1. Method for managing messages between at least two parties, wherein a portal carries out the following steps:
a) storing two or more address identifiers of a second party for reaching at least two different electronic terminals via corresponding different format-specific transmission channels;
b) receiving a message from a first party for the second party;
c) assigning the two or more address identifiers of the second party to the message;
d) selecting a transmission channel suitable for the assigned address identifiers in order to transmit the message to the second party and
e) transmitting the message to the second party via the selected transmission channel,
**characterised in that** after assigning the two or more address identifiers of the second party to the message, the portal sends the first party the address identifiers available for selection and, after receiving a reply message from the first party indicating which address identifier the first party has selected, the portal selects the transmission channel that suits the address identifier and transmits the message through the selected transmission channel to the second party or parties selected.

2. Method according to claim 1, **characterised in that** the selecting of a transmission channel that suits an address identifier is carried out according to a predetermined sequence.

3. Method according to claim 1 or 2, **characterised in that** the portal receives a reply message from the second party and prepares the reply message received for the first party.

4. Method according to one of claims 1 to 3, **characterised in that** the two or more address identifiers of a second party are stored in a party file assigned to the first party.

## Revendications

1. Procédé destiné à la gestion de messages entre au moins deux participants, un portail exécutant les étapes suivantes consistant à :
a) enregistrer deux indicatifs d'adresse ou plus d'un deuxième participant permettant de joindre au moins deux terminaux électroniques différents par le biais de différents canaux de transmission de format spécifique correspondants ;
b) recevoir un message d'un premier participant destiné au deuxième participant ;
c) attribuer au message les deux indicatifs d'adresse ou plus du deuxième participant ;
d) sélectionner un canal de transmission adapté à un des indicatifs d'adresse attribués afin de transmettre le message au deuxième participant et
e) transmettre le message au deuxième participant par le biais du canal de transmission sélectionné,
**caractérisé en ce que**, après que les deux indicatifs d'adresse ou plus du deuxième participant ont été attribué au message, le portail envoie au premier participant les indicatifs d'adresse pouvant être sélectionnés et **en ce que**, après la réception d'un message de réponse du premier participant, duquel on peut déduire l'indicatif d'adresse que le premier participant a sélectionné, le portail sélectionne le canal de transmission adapté à l'indicatif d'adresse et transmet le message au(x) deuxième(s) participant(s) sélectionné(s) par le biais du canal de transmission sélectionné.

2. Procédé selon la revendication 1, **caractérisé en ce que** la sélection d'un canal de transmission adapté à un indicatif d'adresse a lieu à l'aide d'une séquence prédéfinie.

3. Procédé selon la revendication 1 ou 2, **caractérisé en ce que** le portail reçoit un message de réponse du deuxième participant et prépare le message de réponse reçu pour le premier participant.

4. Procédé selon l'une quelconque des revendications 1 à 3, **caractérisé en ce que** les deux indicatifs d'adresse ou plus d'un deuxième participant sont enregistrés dans un fichier de participant attribué au premier participant.
